(19) Europäisches Patentamt

European Patent Office

Office européen des brevets

(11) Numéro de publication : **0 448 487 A1**

## (12) DEMANDE DE BREVET EUROPEEN

(21) Numéro de dépôt : **91430006.6**

(22) Date de dépôt : **20.03.91**

(51) Int. Cl.$^5$ : **G01F 23/24, B60S 1/48, B60R 16/02**

(30) Priorité : **22.03.90 ES 9000819**

(43) Date de publication de la demande :
**25.09.91 Bulletin 91/39**

(84) Etats contractants désignés :
**AT BE DE FR GB IT NL SE**

(71) Demandeur : **TRANSPAR IBERICA, S.A.,
(Société de droit espagnol)
Avenida. Castellbisbal s/n
E-08191 Rubl (ES)**

(72) Inventeur : **Mora, Manuel
23, Calle Prat de la Riba
E-08921 Sta. Coloma de Gramanet (ES)**
Inventeur : **Morales, José Luis
41, Calle Murcia
E-08027 Barcelona (ES)**

(74) Mandataire : **Marek, Pierre
28 & 32 rue de la Loge
F-13002 Marseille (FR)**

(54) **Dispositif de contrôle du niveau des liquides.**

(57)   Dispositif de contrôle du niveau des liquides contenus dans un réservoir, caractérisé en ce qu'il comporte un capteur de continuité électrique (SC) constitué par deux conducteurs (4, 4') convenablement distants l'un de l'autre et dépourvus d'isolation au moins dans leurs portions extrêmes (5, 5') se terminant par leurs extrémités libres correspondantes (7, 7') situées dans un même plan horizontal, ce capteur (SC) étant logé en permanence à l'intérieur du réservoir (1) du liquide de nettoyage (6) et convenablement disposé par rapport au niveau minimum (Nmin) préalablement fixé pour ce liquide de nettoyage (6) dans ledit réservoir (1), ledit capteur (SC) se trouvant relié à un circuit inverseur (I) de fonction, ce circuit inverseur (I) se trouvant à son tour relié à un amplificateur (A) agissant sur une signalisation acoustique et/ou optique (9, 10).

**FIG. 1**

EP 0 448 487 A1

## DISPOSITIF DE CONTROLE DU NIVEAU DES LIQUIDES

L'invention concerne un dispositif de contrôle du niveau des liquides qui est plus particulièrement applicable au contrôle du liquide contenu dans le réservoir de liquide de nettoyage équipant normalement les véhicules automobiles.

L'utilisation de liquide de nettoyage, prévu d'origine sur la plupart des véhicules automobiles et contenu dans un réservoir auxiliaire conçu exclusivement à cet effet, pour le nettoyage du pare-brise, de la vitre arrière et des phares avant desdits véhicules, est largement répandue. Ce liquide de nettoyage, consistant normalement, comme il est connu, en eau plate ou en un mélange étudié d'eau et d'un complément ou additif, est projeté sous pression sur les surfaces indiquées ci-dessus sous l'action d'une pompe d'impulsion accouplée au réservoir auxiliaire susdit.

Le liquide de nettoyage contenu dans le réservoir auxiliaire est normalement utilisé en fonction des conditions de route du véhicule, comme par exemple, pour nettoyer le pare-brise lorsque, à cause des projections de boue, d'eau, etc., provoquées par les autres usagers de la chaussée, la visibilité du conducteur à travers ledit pare-brise, est diminuée, en réduisant, de ce fait, la sécurité de conduite du véhicule.

Dans ces conditions, le besoin de pouvoir contrôler à tout moment la quantité de liquide de nettoyage disponible dans le réservoir auxiliaire susmentionné s'impose.

A cet effet, des dispositifs contrôlant le niveau du liquide de nettoyage dans le réservoir auxiliaire, sont disponibles sur le marché. Ce contrôle consiste généralement en un signal lumineux, normalement un voyant indicateur disposé sur le tableau de bord du véhicule automobile qui, en fonctionnement, indique que le niveau minimum préalablement fixé du liquide de nettoyage, vient d'être atteint par celui-ci.

Les réalisations connues de ce dispositif de contrôle sont basées sur l'action exercée sur un relais, couramment appelé "reed", par un flotteur doté d'un matériau magnétique. Le déplacement du flotteur dans une gaine convenablement placée dans le réservoir auxiliaire de liquide de nettoyage est précisément fonction du niveau dudit liquide de nettoyage.

Les dispositifs décrits ci-dessus présentent généralement une grande complexité d'exécution faisant notablement monter le prix de revient du produit final. D'autre part, l'emplacement physique des éléments formant les dispositifs à flotteur oblige celui-ci à se trouver à une certaine hauteur par rapport au fond, ce qui entraîne de fausses lectures de manque de liquide lorsque le niveau normal de celui-ci se trouve modifié, par exemple à cause d'une inclinaison notable du véhicule ou par suite d'une circulation irrégulière de ce dernier.

Dans le but d'apporter une nouvelle réalisation pour le contrôle du niveau du liquide de nettoyage, notamment dans le réservoir auxiliaire prévu à cet effet dans les véhicules automobiles, qui, d'une part, revienne moins cher à la fabrication par rapport aux réalisations connues, et, d'autre part, offre un fonctionnement tout à fait fiable, l'invention propose un dispositif de contrôle du niveau des liquides ayant une structure et un fonctionnement nouveaux.

Le dispositif de contrôle du niveau des liquides, objet de l'invention, est caractérisé en ce qu'il possède un capteur de continuité électrique constitué par deux conducteurs électriques orientés verticalement et convenablement distants l'un de l'autre ; les deux extrémités libres ou bouts de ces conducteurs se trouvent disposées dans un même plan horizontal ou plan perpendiculaire à leurs propres axes longitudinaux, lesdits conducteurs étant dépourvus d'isolation au moins sur un petit tronçon se terminant par leur extrémité libre respective ; ce capteur se trouve logé en permanence à l'intérieur du réservoir de liquide de nettoyage et correctement disposé par rapport au niveau minimum préalablement fixé pour ce liquide dans ledit réservoir, ledit capteur étant relié à un circuit inverseur de fonction qui se trouve à son tour relié à un amplificateur opérant sur une signalisation optique et/ou acoustique, avantageusement placée sur le tableau de bord du véhicule, dans l'application du dispositif au contrôle du niveau du liquide de nettoyage contenu dans le réservoir de liquide de nettoyage équipant les véhicules automobiles. Dans cette application, l'alimentation électrique du dispositif de contrôle s'effectue, de préférence, par l'intermédiaire de la batterie d'accumulateurs du véhicule automobile.

Ainsi, la simplicité extraordinaire des éléments constituant le capteur de continuité du dispositif de contrôle de niveau faisant l'objet de l'invention, ne comprenant aucun élément mobile contrairement aux réalisations connues, apporte une solution économique et hautement fiable quant au fonctionnement dudit dispositif, en réduisant dans une large mesure les sources de mauvais fonctionnement ou de panne à une valeur très faible.

Une autre caractéristique du capteur de continuité du dispositif faisant l'objet de l'invention, consiste en la possibilité d'accoupler le capteur d'une manière indépendante au réservoir de liquide de nettoyage. Alternativement, et selon une autre caractéristique de l'invention, le capteur peut être intégré à la structure de la pompe à liquide de nettoyage elle-même, qui, à son tour, est accouplée audit réservoir de liquide de nettoyage.

Les caractéristiques décrites ci-dessus, relatives à l'indépendance d'accouplement du capteur de continuité au réservoir de liquide de nettoyage ou bien à son intégration à la structure de la pompe, confèrent au dispositif faisant l'objet de l'invention, une grande versatilité opérante et d'adaptation à chaque cas concret d'application. Toute cela entraîne une réduction des coûts globaux correspondant au montage du dispositif de l'invention, spécialement lorsque le capteur de continuité décrit ci-dessus est intégré à la structure de la pompe à liquide de nettoyage.

Les buts, caractéristiques et avantages ci-dessus, et d'autres encore, ressortiront mieux de la description qui suit et des dessins annexés dans lesquels :

La figure 1 est une représentation schématique du dispositif de contrôle du niveau des liquides selon l'invention.

La figure 2 est une représentation schématique des blocs fonctionnels du circuit électrique de ce dispositif.

On se reporte auxdits dessins pour décrire un exemple d'exécution avantageux, quoique nullement limitatif, du dispositif de contrôle du niveau des liquides selon l'invention, en considérant l'application particulièrement intéressante de celui-ci au contrôle du niveau du liquide de nettoyage contenu dans le réservoir de liquide de nettoyage équipant généralement les véhicules automobiles.

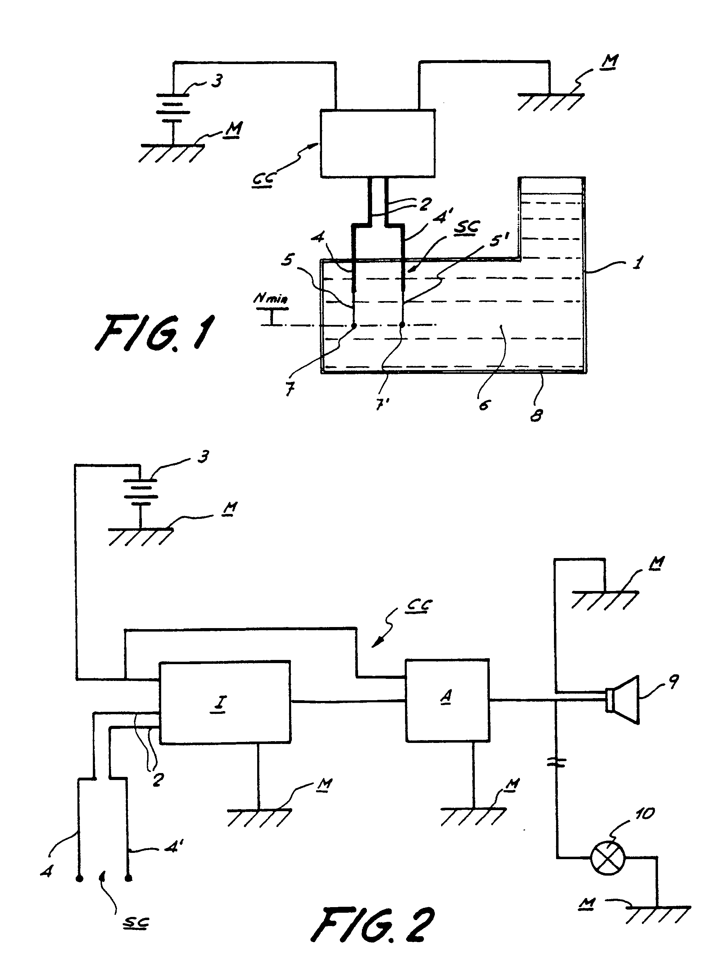

Suivant cet exemple, ce dispositif est formé d'un capteur de continuité électrique SC et d'un circuit de contrôle CC, tel que représenté schématiquement à la figure 1 des dessins.

Le capteur de continuité électrique SC est accouplé au réservoir 1 de liquide de nettoyage, en réalisant le branchement de ce capteur de continuité SC au circuit de contrôle CC, qui est disposé à un emplacement relativement proche du capteur de continuité SC, par l'intermédiaire des conducteurs 2, tel que cela est schématiquement représenté sur la figure 1.

L'alimentation du circuit de contrôle CC, et par conséquent du capteur de continuité SC, est assurée par un générateur d'électricité adéquat qui, dans l'application décrite, est constitué par la batterie d'accumulateurs 3 du véhicule automobile. Ladite batterie d'accumulateurs 3 fournit dans des conditions normales de service une tension continue de 12 V et son pole négatif est directement branché à la structure métallique M du véhicule. Cette structure est donc utilisée comme conducteur électrique.

Le capteur de continuité électrique SC peut être accouplé de façon indépendante au réservoir 1 de liquide de nettoyage ou bien intégré à la structure de la pompe à liquide de nettoyage, qui n'a pas été représentée sur le dessin afin que l'exposé gagne en clarté, ladite pompe étant, à son tour, accouplée au réservoir 1 de liquide de nettoyage. Dans les deux cas, la fonction menée à bien par le capteur de continuité SC demeure inchangée et n'affecte en aucune façon ses performances quant au fonctionnement.

Le capteur de continuité électrique SC est constitué par des conducteurs 4, 4', à section adéquate, se trouvant convenablement distants l'un de l'autre et dont les deux extrémités libres se trouvent sur un même plan horizontal ; ces conducteurs 4, 4' étant reliés aux conducteurs 2, 2, ou formés par une partie de ces derniers.

Lesdits conducteurs 4, 4' sont, dans leurs portions extrêmes 5 et 5', dépourvus d'isolation, dans le but d'établir un bon contact électrique avec le liquide de nettoyage 6 contenu dans le réservoir 1 de liquide de nettoyage. Ces portions extrêmes 5 et 5' sont d'une longueur relativement réduite et terminées par les bouts ou extrémités libres 7 et .7' également dépourvus d'isolant.

Comme le montre la représentation schématique de la figure 1, les extrémités libres 7 et 7' des conducteurs 4, 4' constituant le capteur de continuité SC sont situées, par rapport au fond 8 du réservoir 1 de liquide de nettoyage, au niveau Nmin correspondant au niveau minimum préalablement fixé du liquide de nettoyage 6 contenu dans le réservoir 1 de liquide de nettoyage.

Logiquement, le niveau Nmin décrit ci-dessus sera, dans la pratique, différent pour chaque application, et, plus précisément, sera fonction de la forme du réservoir 1 de liquide de nettoyage et du volume minimum techniquement acceptable de liquide de nettoyage 6 contenu dans ledit réservoir 1.

Quant les conducteurs 4, 4' entrent en contact avec le liquide de nettoyage 6, la différence de potentiel existant entre eux entraîne le passage d'un faible courant électrique à travers ledit liquide de nettoyage 6 de façon que celui-ci établisse la fermeture électrique du circuit ainsi formé.

Quant le niveau du liquide de nettoyage 6 descend au-dessous du niveau Nmin, où sont placés les bouts ou extrémités libres 7 et 7' des conducteurs 4, 4', le passage du courant électrique est interrompu et, par conséquent, le circuit décrit ci-dessus est ouvert.

La figure 2 montre, également d'une manière schématique, les éléments constituant le circuit de contrôle CC selon l'exemple de réalisation retenu et l'interconnexion correspondante.

Le capteur de continuité SC est branché au circuit inverseur I par l'intermédiaire des deux conducteurs 2.

Le circuit inverseur I est connecté à un amplificateur A, qui agit, selon l'exemple de réalisation illustré, sur un haut-parleur 9 et sur un voyant 10 disposés sur le tableau de bord du véhicule, lesquels remplissent la fonction d'éléments de signalisation acoustique et lumineuse, respectivement, indiquant que le liquide de nettoyage 6 contenu dans le réservoir 1 de liquide de nettoyage est arrivé à un niveau inférieur au niveau Nmin préalablement déterminé.

Logiquement, la signalisation, du fait que le niveau atteint par le liquide de nettoyage 6 est inférieur au niveau Nmin préalablement fixé, peut se faire indifféremment par n'importe laquelle des deux moyens de signalisation indiqués ci-dessus.

Le circuit inverseur I a pour objet d'adapter le signal électrique fourni par le capteur de continuité SC à la logique fonctionnelle du dispositif de contrôle. En effet, le passage du courant électrique à travers le liquide de nettoyage 6, en fermant le circuit décrit ci-dessus, ne doit pas actionner les éléments de signalisation acoustique et lumineuse constitués par le haut-parleur 9 et le voyant 10, respectivement, tandis que, au contraire, lorsque le passage du courant ne se produit pas à travers le liquide de nettoyage 6, les éléments de signalisation acoustique et lumineuse susmentionnés doivent être actionnés en indiquant que le liquide de nettoyage 6 a atteint le niveau Nmin défini précédemment.

De même, le circuit inverseur I a pour fonction d'empêcher que les variations subies par le niveau de liquide de nettoyage 6 contenu dans le réservoir 1 de liquide de nettoyage, dues aux conditions de circulation routière du véhicule automobile, n'entraînent l'actionnement des éléments de signalisation acoustique et lumineuse constitués par le haut-parleur 9 et le voyant 10, respectivement, en fournissant ainsi une information erronée.

L'amplificateur A a pour mission de fournir la tension et l'intensité du courant électrique aux valeurs adéquates dont le haut-parleur 9 et le voyant 10 ont besoin pour leur bon fonctionnement.

## Revendications

1. - Dispositif de contrôle du niveau des liquides contenus dans un réservoir, caractérisé en ce qu'il comporte un capteur de continuité électrique (SC) constitué par deux conducteurs (4, 4') convenablement distants l'un de l'autre et dépourvus d'isolation au moins dans leurs portions extrêmes (5, 5') se terminant par leurs extrémités libres correspondantes (7, 7') situées dans un même plan horizontal, ce capteur (SC) étant logé en permanence à l'intérieur du réservoir (1) du liquide de nettoyage (6) et convenablement disposé par rapport au niveau minimum (Nmin) préalablement fixé pour ce liquide de nettoyage (6) dans ledit réservoir (1), ledit capteur (SC) se trouvant relié à un circuit inverseur (I) de fonction, ce circuit inverseur (I) se trouvant à son tour relié à un amplificateur (A) agissant sur une signalisation acoustique et/ou optique (9, 10).

2. - Dispositif de contrôle du niveau des liquides selon la revendication 1 applicable au contrôle du niveau du liquide de nettoyage contenu dans le réservoir de liquide de nettoyage monté sur les véhicules automobiles, caractérisé en ce que la signalisation acoustique et/ou optique (9, 10) est placée sur le tableau de bord desdits véhicules.

3. - Dispositif de contrôle du niveau des liquides suivant l'une des revendications 1 ou 2 applicable au contrôle du liquide de nettoyage contenu dans le réservoir de liquide de nettoyage monté sur les véhicules automobiles, caractérisé en ce que l'alimentation dudit dispositif de controle s'effectue par l'intermédiaire de la batterie d'accumulateurs (3) desdits véhicules.

4. - Dispositif de contrôle du niveau des liquides selon l'une quelconque des revendications 1 à 3, caractérisé en ce que le capteur de continuité électrique (SC) est accouplé de façon indépendante au réservoir (1) de liquide de nettoyage (6).

5. - Dispositif de contrôle du niveau des liquides selon l'une quelconque des revendications 1 à 3, caractérisé en ce que le capteur de continuité électrique (SC) est intégré à la structure de la pompe à liquide de nettoyage (6) elle-même, laquelle est accouplée au réservoir (1) de liquide de nettoyage (6).

FIG.1

FIG.2

EP 0 448 487 A1

Office européen
des brevets

**RAPPORT DE RECHERCHE EUROPEENNE**

Numero de la demande

EP 91 43 0006

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| X | FR-A-2 378 266 (LUCAS INDUSTRIES LTD)<br>* En entier * | 1-4 | G 01 F 23/24<br>B 60 S 1/48<br>B 60 R 16/02 |
| Y | | 5 | |
| Y | FR-A-2 584 459 (JULIEN ET MEGE)<br>* Page 1, ligne 29 - page 2, ligne 32; figures * | 5 | |
| A | US-A-4 034 336 (ARAI)<br>* Colonne 3, ligne 19 - colonne 4, ligne 32; figures 1,2 * | 1-4 | |
| A | DE-A-3 827 744 (VDO ADOLF SCHINDLING)<br>* Revendication 1; figures * | 1,4 | |
| A | FR-A-2 205 663 (BENDIBERICA S.A.)<br>* Page 1, lignes 31-35; page 3, ligne 36 - page 4, ligne 2; figures * | 1-4 | |

**DOMAINES TECHNIQUES RECHERCHES (Int. Cl.5)**

G 01 F
B 60 S

Le présent rapport a été établi pour toutes les revendications

| Lieu de la recherche | Date d'achèvement de la recherche | Examinateur |
|---|---|---|
| LA HAYE | 18-06-1991 | ROSE A.R.P. |

EPO FORM 1503 03.82 (P0402)